# FASCICULE DE BREVET EUROPEEN

(11) **EP 4 565 831 B1**
(45) Date de publication et mention de la délivrance du brevet: **10.06.2026**
(21) Numéro de dépôt: 23744417.9
(22) Date de dépôt: 17.07.2023
(51) Int. Cl.: F28D 9/00, F28D 1/03, F28D 1/047, F28D 1/053, F28D 21/00, F28F 9/02, F28F 9/26, H01M 10/625, H01M 10/643, H01M 10/6557, H01M 10/617, H01M 10/6556, H01M 10/6567, H01M 10/6568, H01M 10/613

(54) **DISPOSITIF DE REGULATION THERMIQUE, NOTAMMENT DE REFROIDISSEMENT POUR VEHICULE AUTOMOBILE**
TEMPERIERVORRICHTUNG, INSBESONDERE KÜHLEINRICHTUNG FÜR EIN KRAFTFAHRZEUG
TEMPERATURE CONTROL DEVICE, IN PARTICULAR COOLING DEVICE FOR A MOTOR VEHICLE

(30) Priorité: 02.08.2022 FR 2208019
(43) Date de publication de la demande: 11.06.2025
(73) Titulaire: Valeo Electrification, 95892 Cergy Pontoise (FR)
(72) Inventeur: HERAULT, Christophe, 78322 Le Mesnil-Saint-Denis Cedex (FR); CHARDIN, Etienne, 78322 Le Mesnil-Saint-Denis Cedex (FR)
(74) Mandataire: Valeo Powertrain Systems
(86) Numéro de dépôt international: PCT/EP2023/069808
(87) Numéro de publication internationale: WO 2024/028091

(56) Documents cités:
- WO-A1-2018/206894
- WO-A1-2020/094365
- FR-A1- 3 103 264
- GB-A- 2 586 058

## Description

La présente invention concerne un dispositif de régulation thermique, notamment de refroidissement, notamment pour composant électrique susceptible de dégager de la chaleur lors de son fonctionnement, notamment un dispositif de refroidissement d'au moins une batterie ou cellules de batterie de véhicule, par exemple un véhicule. Le véhicule peut être de type terrestre, maritime ou aérien.

Il est connu de nos jours d'équiper des véhicules électriques, thermiques ou hybrides d'organes de stockage d'énergie électrique permettant une alimentation électrique des différents éléments du véhicule. Ces organes de stockage d'énergie électrique sont généralement composés de cellules de stockage d'énergie électrique positionnées dans un pack-batterie.

Les constructeurs automobiles cherchent aujourd'hui à fournir des véhicules électriques ou hybrides plus puissants, et dont l'autonomie électrique est augmentée. Pour cela, de plus en plus de packs-batterie, et/ou des packs-batterie de plus en plus grand, sont installés sur ces véhicules électriques ou hybrides. Il est connu d'installer l'ensemble ou au moins une partie de ces packs-batterie au niveau du plancher du véhicule, sensiblement sur toute la largeur du véhicule.

On comprend que, lors du fonctionnement du véhicule, les packs-batterie peuvent dégager une quantité de chaleur importante et dès lors être soumis à des hausses de température pouvant provoquer dans certains cas leur endommagement, voire leur destruction. Par conséquence, leur refroidissement est essentiel afin de les maintenir en bon état et d'assurer ainsi la fiabilité, l'autonomie et la performance du véhicule. Par ailleurs, le fonctionnement des packs-batterie peut être moins efficace en cas de basses températures, les composants électriques ou électroniques équipant ces packs-batterie ayant alors besoin d'un temps de montée en température avant de fonctionner à plein rendement.

Pour ce faire, un ou plusieurs dispositifs de régulation thermique destinés à réguler la température des packs-batterie sont mis en œuvre pour assurer les fonctions de chauffage et/ou de refroidissement des composants électriques ou électroniques à l'intérieur de ces packs-batteries et ainsi optimiser le fonctionnement des différents composants.

Ces dispositifs de régulation thermique sont généralement parcourus par un fluide caloporteur qui peut selon les besoins soit absorber la chaleur émise par chaque pack-batterie afin de le refroidir soit apporter de la chaleur si la température du pack-batterie est insuffisante pour son bon fonctionnement.

Il est notamment connu, dans des pack-batterie où des cellules de stockage d'énergie électrique sont disposées verticalement les unes à côté des autres de manière à former une pluralité de rangées successives de cellules, d'avoir des dispositifs de régulation thermique présentant un tube disposé entre deux rangées de cellules et au sein de laquelle du fluide caloporteur est apte à circuler. Le contact entre le tube et les cellules permet une évacuation, ou un apport, de calories via le fluide caloporteur. Pour gérer l'arrivée et l'évacuation du fluide caloporteur, une boîte de collecte de fluide est disposée à une extrémité du tube et des conduits d'arrivée et de sortie de fluide caloporteur sont raccordés à cette boîte de collecte. Plus particulièrement, lorsque plusieurs dispositifs de régulation thermique sont disposés en parallèle pour être respectivement insérés entre deux rangées de cellules, et que les conduits doivent être raccordés successivement à chaque boîte de collecte des dispositifs de régulation thermique, il est connu de former respectivement le conduit d'arrivée et le conduit de sortie de fluide caloporteur par une succession de portions tubulaires parmi lesquelles des manchons solidaires de chaque boîte de collecte et des moyens additionnels de raccordement interposés entre les manchons pour les fixer les uns aux autres et permettre un passage étanche de fluide caloporteur au sein de chacune des portions tubulaires.

La dimension des packs-batterie doit être de plus en plus grande pour répondre aux besoins d'énergie électrique de plus en plus importants des véhicules électriques ou hybrides modernes, et le nombre de rangées de cellules, et donc le nombre de tubes interposés entre ces rangées de cellule pour réaliser la régulation thermique doit être de plus en plus grand. Il en résulte que le raccordement des conduits aux différentes boîtes de collecte peut être fastidieux du fait du grand nombre de pièces à assembler les unes aux autres.

Par ailleurs, la multiplication du nombre de pièces et de leurs tolérances de fabrication respectives implique des jeux d'assemblage plus grands et une complexité accrue pour la réalisation de cet assemblage.

Un exemple de dispositif de régulation thermique pour le refroidissement d'organes de stockage d'énergie électrique, consiste en un dispositif de régulation thermique comportant un tube configuré pour être au contact des organes de stockage d'énergie électrique et comportant au moins un canal de circulation de fluide caloporteur, une boîte de collecte disposée à une extrémité du tube et comportant des chambres de collecte communiquant fluidiquement avec l'au moins un canal de circulation du tube, et au moins deux manchons de raccordement disposés de part et d'autre de la boîte de collecte et configurés pour communiquer avec la même chambre de collecte, les manchons de raccordement présentant des formes distinctes l'un par rapport à l'autre.

D'autres dispositifs de régulation thermique sont connus de GB-A-2586058 et de WO-A-2018206894.

La demande est toujours plus forte pour des dispositifs de régulation thermique pour le refroidissement d'organes de stockage d'énergie électrique dont l'efficacité des échanges thermiques est amélioré.

Pour des raisons de simplicité de fabrication, au moins les boîtes de collectes de tels dispositifs de régulation thermique sont formées par emboutissage, par exemple de métal tel que de l'aluminium. L'emboutissage permet ainsi la formation de reliefs de manière relativement simple, mais cette technique ne permet pas de former des angles droits. En effet, l'emboutissage crée un arrondi appelé ici rayon d'emboutissage, provoquant des approximations de reliefs supposés droits.

Lorsque la boîte de collecte comprend différents compartiments, il est connu de séparer ceux-ci par des reliefs de la boîte elle-même, par une cloison séparatrice. Cependant, en raison du rayon d'emboutissage, il est impossible de placer le tube en contact avec la paroi verticale des boîtes de collecte traditionnelles. En effet, le contact n'est pas parfait à cause de cet arrondi, là où le tube droit est poussé en butée dans la boîte de collecte jusqu'à une cloison séparatrice. Par conséquent, une fuite (dit by-pass) est présente entre les flux entrants et sortants. Les performances de refroidissement sont donc diminuées.

La présente invention vise à résoudre le problème technique en proposant un dispositif spécifique permettant d'améliorer les performances de refroidissement.

La présente invention concerne ainsi un dispositif de régulation thermique pour le refroidissement d'organes de stockage d'énergie électrique, le dispositif de régulation thermique comportant un tube configuré pour être au contact d'au moins un organe de stockage d'énergie électrique, le tube comportant une pluralité de canaux de circulation de fluide caloporteur,
au moins une première boîte de collecte disposée à une première extrémité du tube, la première boite de collecte comprenant au moins deux coques configurées pour être assemblées ensemble pour former une chambre de collecte communiquant fluidiquement avec la pluralité de canaux de circulation du tube, au moins une desdites coques, de préférence les deux coques, comprennent au moins une cloison séparatrice présentant une extrémité configurée pour être en contact avec une extrémité du tube lorsque les deux coques sont assemblées avec ledit tube, afin de séparer la chambre de collecte en au moins deux parties étanches l'une par rapport à l'autre quand les coques sont assemblées, chacune des parties communiquant fluidiquement respectivement avec une partie de la pluralité de canaux de circulation, caractérisé en ce qu'au moins une cloison séparatrice, de préférence les deux, est obtenue par emboutissage, et en ce que la base de ladite cloison séparatrice comprend un embouti formant une rainure, la rainure étant configurée pour comprendre l'angle dû à l'emboutissage, de façon à ce que l'extrémité de la cloison séparatrice présente une face parallèle à la face de l'extrémité du tube.

La solution technique consiste à ainsi positionner une rainure en bas de la paroi de la cloison séparatrice pour ce que ce soit cette rainure qui comprenne le rayon d'emboutissage, sans interférence avec le tube.

Avantageusement, cela permet d'assurer la verticalité de la paroi de la cloison séparatrice en contact avec l'extrémité du tube afin de garantir un contact étanche entre les deux éléments et ainsi s'assurer de la séparation entre les flux de la boite de collecte.

De préférence, cette invention pourra présenter plusieurs aspects optionnels:
Selon une caractéristique de l'invention, l'extrémité de la cloison séparatrice de chaque coque présente une paroi verticale configurée pour être en contact continu avec l'extrémité du tube.
Selon une caractéristique de l'invention, la cloison séparatrice est en contact avec le tube au niveau d'au moins un canal de la pluralité de canaux de distribution.
Selon une caractéristique de l'invention, le canal en contact avec la cloison séparatrice est plein.
Selon une caractéristique de l'invention, le canal en contact avec la cloison séparatrice est vide, la cloison séparatrice étant dimensionnée pour obstruer le canal lorsque les deux coques de la boite collectrice sont assemblées avec le tube.
Selon une caractéristique de l'invention, le dispositif comprend un deuxième embouti au sommet de la cloison séparatrice, configuré pour réduire le rayon d'emboutissage dudit sommet de façon à ce que l'extrémité de la cloison séparatrice présente une face parallèle à la face de l'extrémité du tube.

Cela permet avantageusement l'obtention d'un rayon aussi petit que possible en sommet de paroi.

En d'autres termes, le deuxième embouti permet de réduire le rayon d'emboutissage présent au niveau de l'angle entre la face de l'extrémité de la cloison séparatrice, destinée à être disposée en contact avec la face de l'extrémité du tube, et la face formant le sommet de la cloison séparatrice.

Selon une autre caractéristique de l'invention, le deuxième embouti est formé de façon à obtenir un angle sensiblement droit au niveau du sommet.

Selon une caractéristique de l'invention, le dispositif comprend une deuxième boite de collecte à une deuxième extrémité du tube opposée à la première extrémité du tube comprenant la première boite de collecte, la deuxième boite de collecte étant identique à la première boite de collecte.

Selon une caractéristique de l'invention, les deux coques sont symétriques.

Selon une caractéristique de l'invention, la gorge présente une profondeur comprise entre 0.05 mm et 0.2 mm.

Avantageusement, la profondeur de cette gorge est dimensionnée de manière à ce qu'elle permette d'escamoter le rayon en pied de paroi et de préférence également d'être comblée par le joint de brasage.

Selon une caractéristique de l'invention, la boite de collecte est en métal tel que l'aluminium ou en plastique.

Selon une caractéristique de l'invention, au moins une des coques, de préference les deux, comprend des orifices.

Selon une caractéristique de l'invention, au moins deux manchons de raccordement, de préférence quatre, sont configurés pour communiquer fluidiquement avec la chambre de collecte, de préférence avec chaque partie de la chambre de collecte, les manchons de raccordement présentant de préférence des formes distinctes l'un par rapport à l'autre.

L'invention concerne aussi un système de régulation thermique comprenant plusieurs dispositifs de régulation thermique tels que décrits précédemment, et plusieurs organes de stockage électrique disposés en rangée, les dispositifs de régulations étant connectés les uns aux autres par leurs manchons et étant configurés pour être en contact avec lesdites rangées d'organes de stockage.

L'invention concerne aussi un procédé d'assemblage d'un dispositif de régulation thermique tel que décrit précédemment, qui comprend les étapes suivantes :
- on fournit deux coques qu'on emboutit de façon à former une cloison séparatrice de la chambre de collecte, la cloison séparatrice comprenant à sa base un embouti formant gorge présentant le rayon d'embouti, aussi appelé embouti résiduel,
- on assemble les deux coques l'une avec l'autre pour former ladite boite de collecte formant la chambre de collecte,
- on fournit un tube comportant une pluralité de canaux de circulation (8) de fluide caloporteur, qu'on introduit dans la boite de collecte, de façon à ce qu'une extrémité du tube soit en contact avec une extrémité de la cloison séparatrice,
- on fixe l'assemblage des coques et du tube, par brasage, collage, soudage, clipsage, ultrason, ou un mélange de ceux-ci.

Selon une caractéristique de l'invention, l'embouti formant gorge est réalisé dans une seconde étape d'emboutissage.

Selon une caractéristique de l'invention, le procédé comprend en outre une étape d'emboutissage du sommet de la cloison séparatrice, de façon à réduire le rayon d'emboutissage dudit sommet pour que l'extrémité de la cloison séparatrice présente une face parallèle à la face de l'extrémité du tube.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[Fig. 1] est une représentation en perspective d'un pack-batteries dans son ensemble équipé de plusieurs organes de stockage d'énergie électrique et d'une pluralité de dispositifs de régulation thermique selon un exemple ;
[Fig. 2] est une vue de détail de plusieurs organes de stockage d'énergie électrique et d'une extrémité de plusieurs dispositifs de régulation thermique, vus sur la figure 1 ;
[Fig. 3] est une représentation schématique en perspective dans laquelle la boîte de distribution a été représentée partiellement (une seule coque) pour rendre visible sa structure interne et pour rendre visible la structure interne du tube à une extrémité duquel est fixée la boîte de distribution ;
[Fig. 4] est un détail schématique en perspective du dispositif de régulation thermique en vue éclatée ;
[Fig. 5] est une vue schématique d'une coque selon un premier mode de réalisation ;
[Fig. 6] représente une représentation schématique en vue de coupe d'un dispositif de régulation thermique selon un deuxième mode de réalisation de l'invention ;
[Fig. 7] est un détail en vue de haut (fig. 7A) d'un dispositif de régulation thermique selon un second mode de réalisation, et de face (fig. 7B) selon la coupe D-D présente sur la figure 7A. ;
[Fig. 8] est une représentation en perspective d'un dispositif de régulation thermique selon un troisième mode de réalisation sur laquelle la circulation en U du fluide caloporteur destiné à circuler dans ce dispositif a été représenté par des flèches en traits pleins ;
[Fig. 9] est une représentation en perspective d'un dispositif de régulation thermique selon un quatrième mode de réalisation sur laquelle la circulation en I du fluide caloporteur destiné à circuler dans ce dispositif a été représenté par des flèches en traits pleins ;

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieure.

Dans la description qui va suivre, les dénominations « longitudinale », « transversale » et « verticale » se réfèrent à l'orientation d'un dispositif de régulation thermique selon l'invention. Une direction longitudinale correspond à une direction d'extension principale d'un dispositif de régulation thermique et une direction transversale correspond à une direction sensiblement perpendiculaire à un plan d'extension principal d'un dispositif de régulation thermique et à une direction d'extension principale d'un manchon de raccordement hydraulique du dispositif de régulation thermique, cette direction transversale étant perpendiculaire à l'axe longitudinal L. Enfin, une direction verticale est perpendiculaire à la direction longitudinale et à la direction transversale.

La présente invention concerne ainsi un dispositif de régulation thermique (4) pour le refroidissement d'organes de stockage d'énergie électrique (2), le dispositif de régulation thermique (4) comportant un tube (6) configuré pour être au contact d'au moins un organe de stockage d'énergie électrique, le tube comportant une pluralité de canaux de circulation (8) de fluide caloporteur,
au moins une première boîte de collecte (10) disposée à une première extrémité du tube (61), la première boite de collecte (10) comprenant au moins deux coques (11) configurées pour être assemblées ensemble pour former une chambre de collecte (26) communiquant fluidiquement avec la pluralité de canaux de circulation (8) du tube (6),
au moins une desdites coques (11), de préférence les deux coques (11), comprennent au moins une cloison séparatrice (5) présentant une extrémité configurée pour être en contact avec une extrémité du tube (6) lorsque les deux coques sont assemblées avec ledit tube, afin de séparer la chambre de collecte (26) en au moins deux parties (26a, 26b) étanches l'une par rapport à l'autre quand les coques sont assemblées, chacune des parties communiquant fluidiquement respectivement avec une partie de la pluralité de canaux de circulation (8), caractérisé en ce qu'au moins une cloison séparatrice, de préférence les deux, est obtenue par emboutissage, et en ce que la base de ladite cloison séparatrice comprend un embouti (9) formant une rainure, la rainure étant configurée pour comprendre l'angle dû à l'emboutissage, de façon à ce que l'extrémité de la cloison séparatrice (5) présente une face parallèle à la face de l'extrémité du tube (61).

On comprend que le cœur de l'invention réside dans la présence d'un embouti contigu à l'extrémité de la cloison séparatrice destinée à être mise en contact avec l'extrémité du tube du dispositif afin d'inclure le rayon d'emboutissage dans ledit embouti et obtenir une extrémité de cloison séparatrice complètement droite.

Cela permet avantageusement un contact amélioré total entre ladite cloison séparatrice de la boite et ledit tube.

En effet, cela permet de s'assurer de la verticalité des deux faces entre elles, sans que le tube ne soit en contact avec l'angle résiduel d'emboutissage de la boite, plus précisément de la cloison, et donc l'étanchéité des deux parties entre elles. Cela permet in fine une séparation entre les flux d'entrée et de sortie de fluide et donc des échanges thermiques améliorés et durables.

L'invention telle qu'elle vient d'être décrite permet bien de répondre aux objectifs qu'elle s'était fixés, à savoir proposer un dispositif de stockage d'énergie électrique 1 sûr et sans fuites.

La présente invention comprend en outre les caractéristiques suivantes prises seules ou en combinaison :
Dans certaines modes de réalisation, l'extrémité de la cloison séparatrice de chaque coque présente une paroi verticale configurée pour être en contact continu avec l'extrémité du tube.
Dans certaines modes de réalisation, la cloison séparatrice est en contact avec le tube au niveau d'au moins un canal de la pluralité de canaux de distribution.
Dans certaines modes de réalisation, le canal en contact avec la cloison séparatrice est plein.
Dans certaines modes de réalisation, le canal en contact avec la cloison séparatrice est vide, la cloison séparatrice étant dimensionnée pour obstruer le canal lorsque les deux coques de la boite collectrice sont assemblées avec le tube.
Dans certaines modes de réalisation, le dispositif comprend un deuxième embouti (non représenté) au sommet de la cloison séparatrice, configuré pour réduire le rayon d'emboutissage dudit sommet de façon à ce que l'extrémité de la cloison séparatrice (5) présente une face parallèle à la face de l'extrémité du tube (61).

Cela permet avantageusement l'obtention d'un rayon aussi petit que possible en sommet de paroi.

En d'autres termes, le deuxième embouti permet de réduire le rayon d'emboutissage présent au niveau de l'angle entre la face de l'extrémité de la cloison séparatrice, destinée à être disposée en contact avec la face de l'extrémité du tube (61), et la face formant le sommet de la cloison séparatrice.

Dans un mode de réalisation particulier, le deuxième embouti est formé de façon à obtenir un angle sensiblement droit au niveau du sommet.

Dans certaines modes de réalisation, le dispositif comprend une deuxième boite de collecte à une deuxième extrémité du tube opposée à la première extrémité du tube comprenant la première boite de collecte, la deuxième boite de collecte étant identique à la première boite de collecte.

Dans certaines modes de réalisation, les deux coques sont symétriques.

Dans certaines modes de réalisation, la gorge présente une profondeur comprise entre 0.05mm et 0.2 mm.

Dans certaines modes de réalisation, la boite de collecte (10) est en métal tel que l'aluminium ou en plastique.

Dans certaines modes de réalisation, au moins une des coques, de préference les deux, comprend des orifices.

Dans certaines modes de réalisation, au moins deux manchons de raccordement (18, 18a, 18b), de préférence quatre, sont configurés pour communiquer fluidiquement avec la chambre de collecte (26), de préférence avec chaque partie de la chambre de collecte (26), les manchons de raccordement (18, 18a, 18b) présentant de préférence des formes distinctes l'un par rapport à l'autre.

Dans certaines modes de réalisation, un système de régulation thermique comprenant plusieurs dispositifs de régulation thermique (4) tels que décrits précédemment, et plusieurs organes de stockage électrique disposés en rangée, les dispositifs de régulations étant connectés les uns aux autres par leurs manchons et étant configurés pour être en contact avec lesdites rangées d'organes de stockage Dans certaines modes de réalisation concernant le procédé selon l'invention, le procédé comprend les étapes suivantes :
- on fournit deux coques qu'on emboutit de façon à former une cloison séparatrice de la chambre de collecte, la cloison séparatrice comprenant à sa base un embouti formant gorge présentant le rayon d'embouti, aussi appelé embouti résiduel,
- on assemble les deux coques l'une avec l'autre pour former ladite boite de collecte formant la chambre de collecte,
- on fournit un tube (6) comportant une pluralité de canaux de circulation (8) de fluide caloporteur, qu'on introduit dans la boite de collecte, de façon à ce qu'une extrémité du tube soit en contact avec une extrémité de la cloison séparatrice,
- on fixe l'assemblage des coques et du tube, par brasage, collage, soudage, clipsage, ultrason, ou un mélange de ceux-ci.

Dans certaines modes de réalisation, le procédé comprend en outre une étape d'emboutissage du sommet de la cloison séparatrice, de façon à réduire le rayon d'emboutissage dudit sommet pour que l'extrémité de la cloison séparatrice (5) présente une face parallèle à la face de l'extrémité du tube (61).

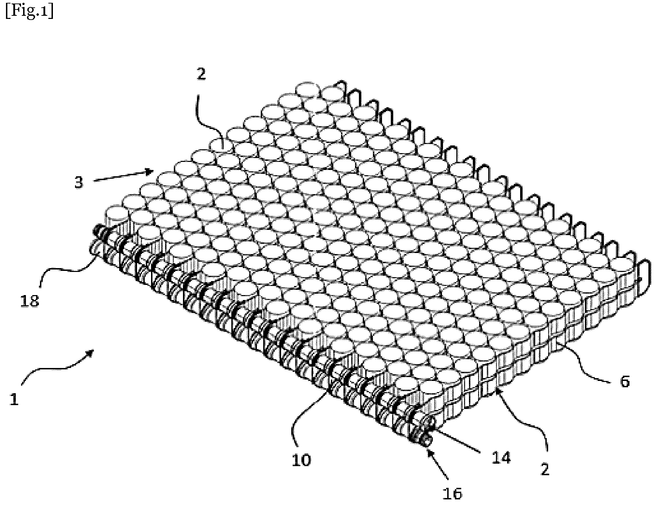

La figure 1 représente plusieurs dispositifs de refroidissement 4 avec plusieurs tubes 6 assemblés par leur paire de manchons 18, avec les cellules 2, avec les coques isolantes.

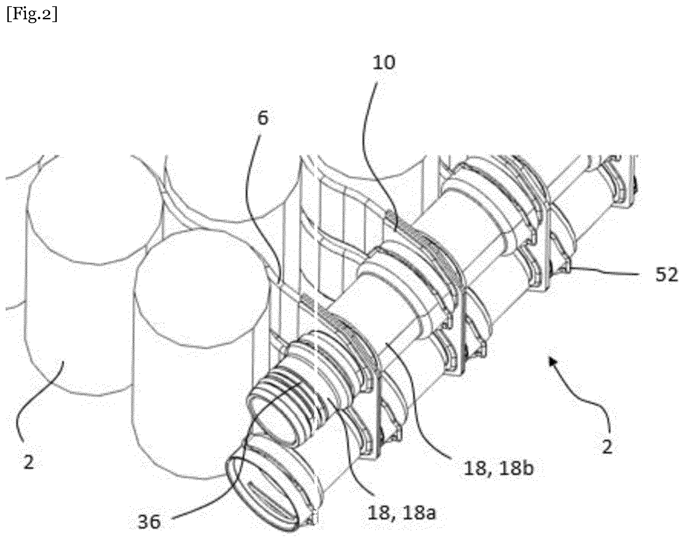

La figure 2 représente un détail de la figure 1 montrant plus en détail ces la connexion entre différents dispositifs de refroidissement.

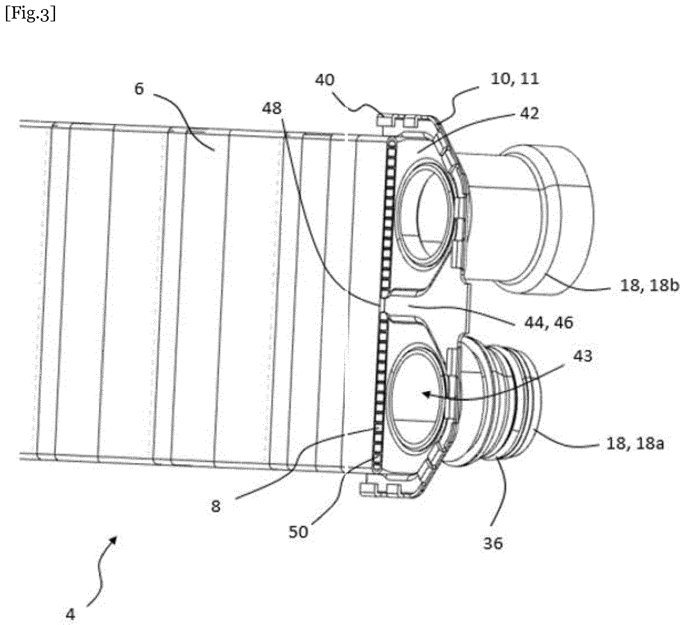

La figure 3 représente une vue du dispositif dans lequel une des coques 11 et une partie de la boite de collecte n'ont pas été représentés. Ainsi, une seule coque 11 et une seule partie de la boite de collecte 10 à laquelle elle est fixée sont représentées.

La figure 3 rend particulièrement visible le fait que la boîte de collecte 10 du dispositif de régulation thermique 4 comporte en son sein au moins une chambre de collecte 26 communiquant fluidiquement avec au moins un des canaux de circulation 8 formés au sein du tube, et plus particulièrement un des ensembles de circulation 21, 22 formés par plusieurs canaux.

Dans certains modes de réalisation, comme représenté à titre d'exemple non limitatif, la boite de collecte 10 est formée par deux parties rapportées et fixées ou soudées l'une contre l'autre, avec des moyens de fixation en périphérie des coques. Au moins une partie comporte des pattes d'accrochage 40 qui permettent un maintien des demi-coques entre elles avant une opération de brasage figeant la position des demi-coques et la tenue de la boite de collecte.

Chaque partie de la boite de collecte présente deux creux 42 formés par déformation de ladite partie et une nervure 44 disposée entre les deux creux. On comprend que lorsque les deux parties sont fixées l'une à l'autre, les creux 42 de chaque partie sont disposés en regard pour former les chambres de collecte 26 précédemment évoquées et les nervures 44 de chaque partie sont au contact l'une de l'autre pour former une cloison séparatrice 46 qui délimite et sépare l'une de l'autre les chambres de collecte 26.

Cette paroi centrale 46 est destinée à être au contact d'une surface pleine du tube formant zone d'étanchéité 48, dépourvue de canaux de circulation, afin d'assurer un contact étanche et d'éviter qu'au sein de la boîte de collecte, du fluide présent dans une première chambre de collecte ne se déverse dans l'autre chambre de collecte, ou dans des canaux qui ne doivent pas être reliés à cette première chambre de collecte.

Chaque creux 42 est défini par une paroi de fond 41 qui est percée d'un orifice 43 sensiblement en son centre. Cet orifice permet un passage de fluide entre la chambre de collecte 26 formée par le creux et un manchon de raccordement 18 de la paire de manchons de raccordement débouchant dans cette chambre de collecte 26.

En d'autres termes, les manchons de raccordement sont configurés pour communiquer chacun avec une chambre de collecte, et on comprend que les manchons disposés de part et d'autre de la boîte de collecte sont configurés pour communiquer avec une même chambre de collecte.

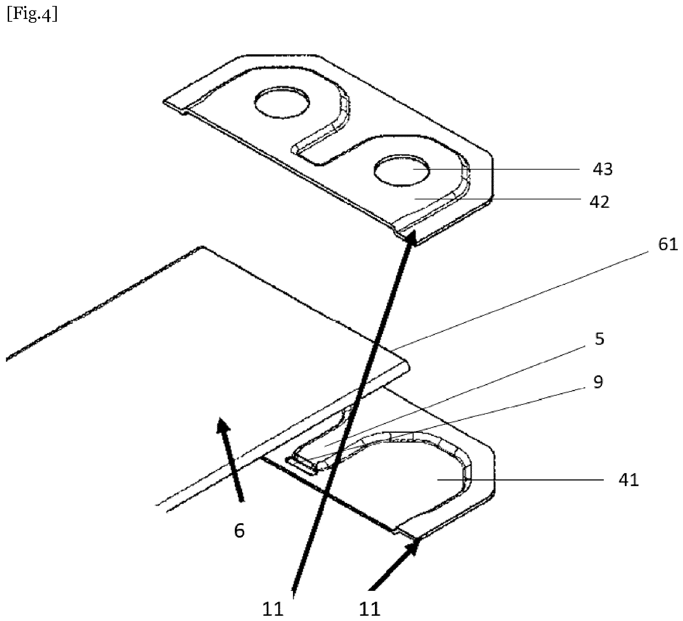

La figure 4 représente une vue simplifiée et éclatée du tube 6 entre les deux coques 11 comprenant chacune une cloison séparatrice 5 dont la base emboutie se termine par une rainure emboutie 9 emportant le rayon d'emboutissage et permettant à la paroi de l'extrémité de la cloison séparatrice 5 d'être complètement droite.

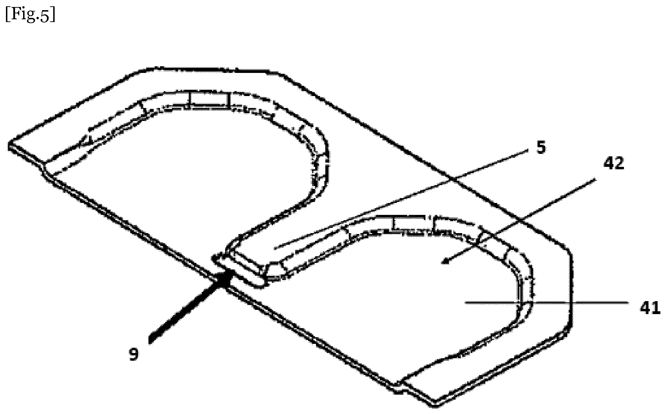

La figure 5 montre en détail cet embouti à la base de la cloison séparatrice 5, qui peut être réalisé en même temps ou dans une étape différée.

De préférence, l'embouti formant rainure ou gorge 9 est réalisé dans le sens inverse de l'embouti formant la cloison séparatrice 5.

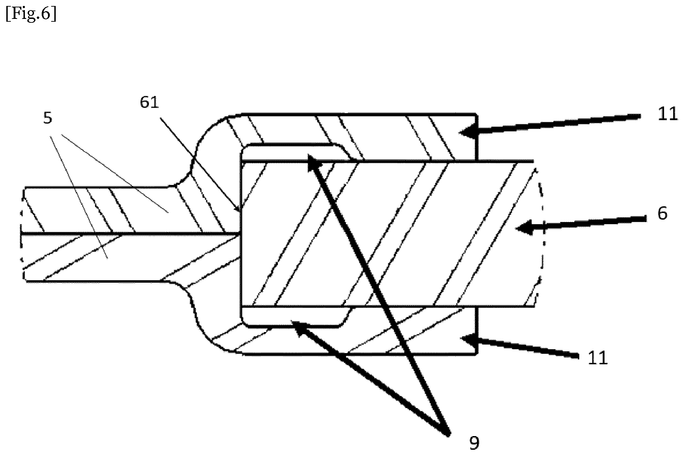

Dans certains modes de réalisation, tel que représenté de façon non limitative à la figure 6, lesdites deux coques 11 sont identiques, et comporte chacune un embouti formant la cloison séparatrice 5 et embouti formant rainure ou gorge 9.

En effet, d'une manière avantageuse, les deux coques 11 sont chacune formées d'une seule et même référence de pièce afin d'optimiser les coûts. L'assemblage se fait ainsi entre deux pièces identiques qu'on peut inverser l'une par rapport à l'autre.

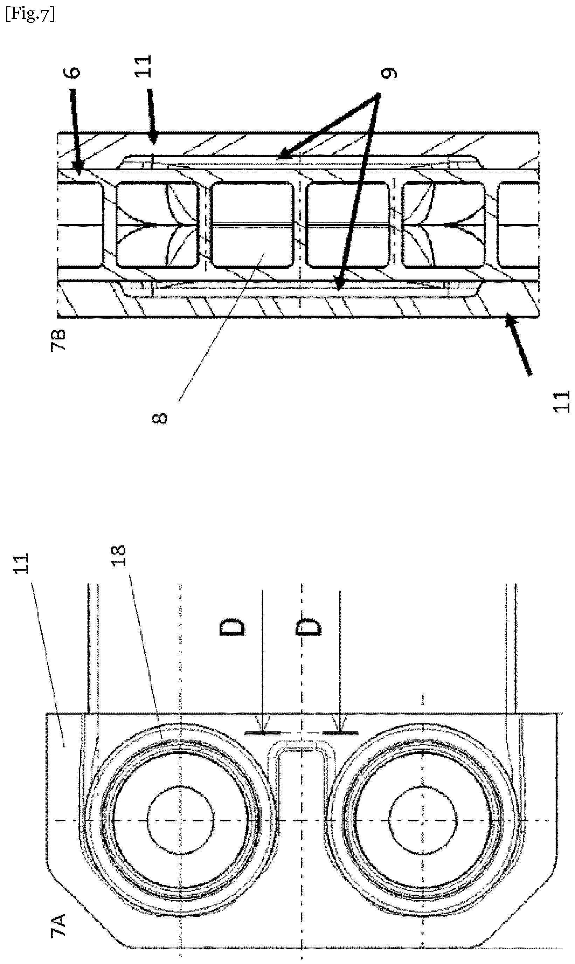

La figure 7 représente une boite de collecte 10 vu du dessus, et sa coupe interne ou l'on peut voir la rainure 9.

La figure 7A permet de situer la coupe D-D (figure 7B). La figure 7B représente un mode de réalisation particulier dans lequel on peut voir les rainures 9 et le fait que la paroi verticale de chaque demi-boîte obstruent deux canaux. Le nombre de canaux obstrués peut varier et dépend de la conception du dispositif. Dans certains modes de réalisation alternatifs, un seul canal est obstrué.

La dimension du dispositif de stockage d'énergie électrique 4 peut ainsi facilement être augmentée sans que cela implique une multiplication des opérations d'assemblage.

Dans un mode de réalisation alternatif, la deuxième boite de collecte est différente de la premiere boite, et forme par exemple un tronçon de retournement. Cela permet avantageusement de connecter la sortie des canaux du tube alimenté par du fluide provenant d'une partie de la chambre de collecte formant zone d'entrée du fluide avec l'entrée des canaux du tube connectée à une partie de la chambre de collecte formant zone de sortie du fluide.

Dans un mode de réalisation préféré, chaque coque comprend 2 orifices permettant l'arrivée et la sortie de fluide par l'intermédiaire des manchons de raccordement 18. Ces manchons peuvent être venu de matière avec chaque coque, ou être assemblés et fixés ultérieurement.

Dans certains modes de réalisation, le dispositif est configuré pour permettre une circulation du fluide en U ou en I.

A titre d'exemple, un dispositif de stockage d'énergie électrique 1, notamment prévu pour équiper un véhicule électrique ou hybride, comporte plusieurs ensembles d'organes de stockage d'énergie électrique 2, également appelés par la suite cellules de stockage d'énergie électrique, et plusieurs dispositifs de régulation thermique 4 agencés à proximité de ces cellules pour permettre un échange thermique entre eux.

Les organes de stockage d'énergie électrique présentent notamment la forme de cellules cylindriques, ici à section circulaire, disposées verticalement, c'est-à-dire perpendiculairement au plan longitudinal et transversal dans lequel s'inscrit principalement le dispositif de stockage d'énergie électrique.

Les organes de stockage d'énergie électrique 2 sont notamment disposés en rangées 3 successives, parallèles les unes aux autres, et chaque rangée, ou ensemble d'organes de stockage d'énergie électrique, s'étend principalement longitudinalement.

Des dispositifs de régulation thermique 4 sont disposés entre deux rangées 3 d'organes de stockage d'énergie électrique voisines, avec notamment un tube 6 qui est configuré pour être au contact des organes de stockage d'énergie électrique 2 de ces deux rangées 3 voisines.

Dans l'exemple illustré à la figure 1, les rangées 3 sont disposées en quinconce les unes par rapport aux autres, c'est-à-dire avec un décalage longitudinal des organes de stockage d'une rangée par rapport aux organes de stockage de la rangée voisine, ce qui permet d'optimiser l'encombrement du dispositif de stockage d'énergie électrique 1, et les dispositifs de régulation thermique 4 comportent chacun un tube 6 de forme ondulée pour pouvoir être au contact de chacun des organes de stockage d'énergie électrique 2 des deux rangées 3 entre lesquelles ils s'étendent respectivement.

Dans un mode de réalisation alternatif, les dispositifs de régulation thermique 4 comportent chacun un tube 6 de forme plate.

Du fluide caloporteur est destiné à circuler à l'intérieur de ce tube 6 de forme ondulée pour pouvoir échanger des calories avec les organes de stockage d'énergie électrique 2, via la paroi conductrice de chaleur du tube. Notamment, lorsque les organes de stockage d'énergie électrique 2 doivent être refroidis suite à une montée en température lors de leur fonctionnement, le fluide caloporteur est destiné à récupérer les calories et à les évacuer hors du dispositif de stockage d'énergie électrique 1.

Chaque dispositif de régulation thermique 4 comporte, pour permettre cet échange de calories, le tube 6 précédemment évoqué, ici de forme ondulé, au sein duquel est formé une pluralité de canaux de circulation 8 de fluide caloporteur, et au moins une boîte de collecte 10 qui est disposée à une extrémité longitudinale du tube 6 et qui a pour vocation de collecter le fluide depuis un conduit d'arrivée 14 de fluide caloporteur et de le distribuer dans le ou les canaux de circulation 8 au sein du tube 6 et/ou pour vocation de collecter le fluide caloporteur en sortie du tube 6 et de le diriger dans un conduit d'évacuation 16 de fluide caloporteur .

En d'autres termes, le fluide caloporteur est destiné à circuler dans le conduit d'arrivée, et à chaque boîte de collecte rencontrée par le conduit d'arrivée, une portion de fluide caloporteur est dirigée vers cette boîte de collecte et le dispositif de régulation thermique associé et une autre portion de fluide caloporteur est dirigée à travers la suite du conduit d'arrivée pour alimenter la boîte de collecte suivante.

A titre d'exemple non limitatif, lorsque le dispositif de refroidissement est utilisé pour refroidir des cellules de batterie automobile, les manchons, boite de collecte et tube sont réalisés en un matériau conducteur tel que du métal, notamment de l'aluminium.

A titre d'exemple non limitatif de dispositif de refroidissement, le conduit d'arrivée 14 de fluide caloporteur et le conduit d'évacuation 16 de fluide caloporteur sont formés par la coopération directe de manchons de raccordement 18 solidaires de deux boîtes de collecte 10 voisines, sans qu'il y ait de dispositifs intermédiaires agencés entre ces manchons de raccordement 18, étant entendu le cas échéant qu'un joint d'étanchéité peut être porté par l'un des manchons de raccordement et être en appui sur l'autre manchon de raccordement au niveau de la zone de raccordement direct entre les manchons.

Les caractéristiques relatives aux manchons de raccordement 18 permettant notamment la coopération directe telle qu'évoquée seront décrits plus en détails ci-après.

Il peut toutefois être constaté à ce stade de la description, en fonction des illustrations des figures 1 et 2, que deux manchons de raccordement 18 s'étendent de part et d'autre d'une boîte de collecte 10 pour former une paire 19, et que les deux manchons de raccordement 18 de cette paire présentent de préférence tel qu'illustré une forme différente l'un de l'autre, de manière à permettre au manchon d'un premier type 18a associé à une première boîte de collecte 10 d'être raccordé directement à un manchon du deuxième type 18b associé à une deuxième boîte de collecte 10, sans qu'il soit nécessaire de prévoir des moyens de raccordement additionnels.

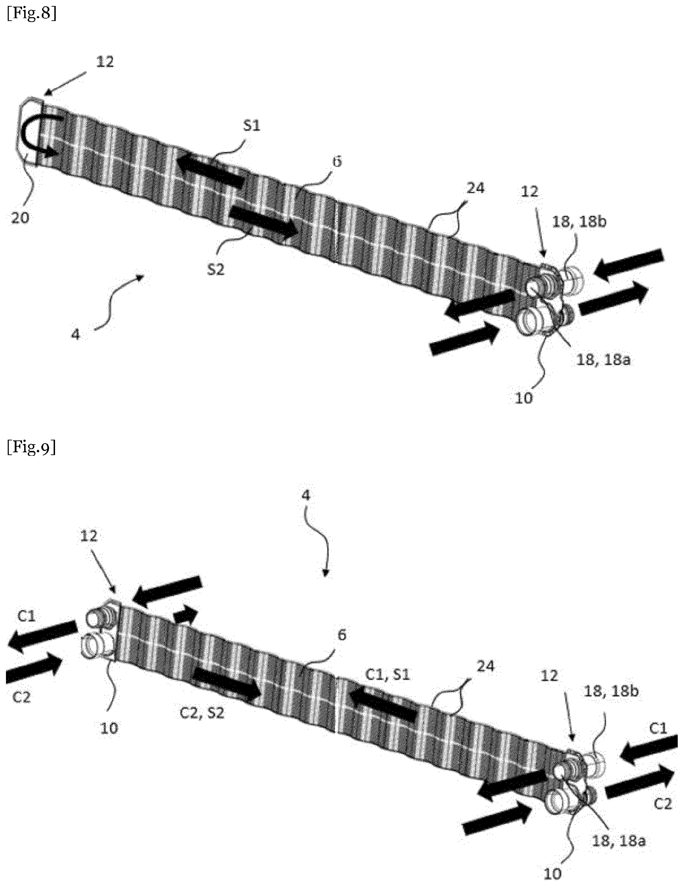

La figure 8 illustre un exemple du dispositif de régulation thermique, dans la circulation du fluide est dite en U, c'est-à dire avec la même portion de fluide caloporteur qui circule dans les deux sens au sein du tube 6 après être passé dans une boîte de renvoi 20 à une des extrémités longitudinales du tube.

Plus particulièrement, le dispositif de régulation thermique 4 comporte dans ce premier mode de réalisation un tube 6 et à chacune de ses extrémités longitudinales une boîte de collecte 10 et une boîte de renvoi formant tronçon de retournement 20.

Le tube 6 comporte plusieurs canaux 8 formés en son sein, répartis en deux ensembles de circulation qui se distinguent en ce qu'une même portion de fluide caloporteur circule dans le premier sens de circulation S1 au sein des canaux d'un premier ensemble de circulation 21 et dans un deuxième sens de circulation S2, opposé au premier sens de circulation S1, au sein des canaux d'un deuxième ensemble de circulation 22.

La boîte de collecte 10 disposée à une première extrémité longitudinale 12 du tube est équipée de manchons de raccordement 18 pour permettre l'arrivée et l'évacuation du fluide caloporteur. La boîte de collecte 10 est configurée pour guider le fluide circulant dans les manchons de raccordement 18 participant à former le conduit d'arrivée de fluide caloporteur 14 vers une partie des canaux, ici les canaux du premier ensemble de circulation 21, au sein du tube et pour guider le fluide sortant du tube par l'autre partie des canaux, ici les canaux du deuxième ensemble de circulation 22, dans les manchons de raccordement 18 participant à former le conduit d'évacuation de fluide caloporteur 16.

La boîte de renvoi 20 disposée à une deuxième extrémité longitudinale du tube 6 ne comporte pas de manchons de raccordement et est uniquement reliée fluidiquement au tube 6. La boîte de renvoi 20 est configurée pour guider le fluide circulant dans un sens dans une partie des canaux de circulation vers l'autre partie des canaux de circulation pour qu'il circule dans l'autre sens.

La figure 9 illustre un deuxième exemple de dispositif de régulation thermique 4, dans la circulation du fluide caloporteur est dite en I, c'est-à dire avec une même portion de fluide caloporteur qui ne circule que dans un sens au sein du tube 6.

Plus particulièrement, le dispositif de régulation thermique 4 comporte dans ce deuxième mode de réalisation un tube 6 et à chacune de ses extrémités longitudinales une boîte de collecte 10 selon l'invention.

Là encore, le tube 6 comporte plusieurs canaux 8 formés en son sein, répartis en deux ensembles de circulation qui se distinguent cette fois en ce que deux portions de fluide différentes peuvent circuler distinctement au sein du tube, dans leur ensemble de canaux respectif. Une première portion de fluide caloporteur peut ainsi circuler dans le premier sens de circulation S1 au sein des canaux du premier ensemble de circulation 21 et une deuxième portion de fluide caloporteur peut circuler dans un deuxième sens de circulation S2, opposé au premier sens de circulation, au sein des canaux du deuxième ensemble de circulation 22.

Il résulte de cette configuration, tel qu'illustré par les flèches visibles sur la figure 4, deux circuits distincts. Un premier circuit C1 comporte une arrivée de fluide par un premier manchon d'une première boîte de collecte, un passage d'une partie de ce fluide dans le tube dans un premier sens de circulation tandis que l'autre partie de ce fluide continue sa route dans le conduit d'amenée en direction d'un dispositif de régulation thermique voisin, et une sortie du fluide via un premier manchon de la deuxième boîte de collecte après avoir traversé le tube, pour rejoindre du fluide provenant du dispositif de régulation thermique voisin. Et un deuxième circuit C2 comporte une arrivée de fluide par un deuxième manchon de la deuxième boîte de collecte, un passage d'une partie de ce fluide dans le tube dans un deuxième sens de circulation tandis que l'autre partie de ce fluide continue sa route dans le conduit d'amenée en direction d'un dispositif de régulation thermique voisin, et une sortie du fluide via un deuxième manchon de la première boîte de collecte après avoir traversé le tube, pour rejoindre du fluide provenant du dispositif de régulation thermique voisin.

L'invention concerne en premier lieu un dispositif comprenant des coques réalisées par emboutissage. Elle peut être toutefois être appliquée pour tous les procédés qui génèrent un rayon en pied de paroi. Ainsi, la présente invention concerne entre autres aussi un dispositif semblable dont la cloison séparatrice est réalisée par usinage, la rainure étant alors elle aussi réalisée par usinage.

L'invention ne saurait toutefois se limiter aux moyens et configurations décrits et illustrés ici, et elle s'étend également à tout moyen ou configuration équivalents et à toute combinaison technique opérant de tels moyens. A titre d'exemple non limitatif, et tel que cela a pu être évoqué précédemment, les formes des manchons peuvent varier dès lors que les manchons de raccordement d'un dispositif de régulation thermique à l'autre peuvent coopérer directement entre eux.

### LISTE DES SIGNES DE REFERENCE

1. Dispositif de stockage d'énergie électrique
2. Organe de stockage d'énergie électrique
3. Rangée de cellules
4. Dispositifs de régulation thermique
5. Cloison séparatrice
6. Tube
61. Extrémité du tube
48. Canal central
8. Canal de circulation de fluide caloporteur
9. Embouti, Gorge
10. Boîte de collecte
11. Coques
12. Extrémité longitudinale
14. Conduit d'arrivée
16. Conduit d'évacuation
18. Manchons de raccordement
18a. Manchon du premier type
18b. Manchon du deuxième type
20. Boîte de renvoi
26. Chambres de collecte
40. moyens de coopération
41. Paroi de fond
42. Creux
43. Orifice

## Revendications

1. Dispositif de régulation thermique (4) pour le refroidissement d'organes de stockage d'énergie électrique (2), le dispositif de régulation thermique (4) comportant un tube (6) configuré pour être au contact d'au moins un organe de stockage d'énergie électrique, le tube comportant une pluralité de canaux de circulation (8) de fluide caloporteur,
au moins une première boîte de collecte (10) disposée à une première extrémité du tube (61), la première boite de collecte (10) comprenant au moins deux coques (11) configurées pour être assemblées ensemble pour former une chambre de collecte (26) communiquant fluidiquement avec la pluralité de canaux de circulation (8) du tube (6),
au moins une desdites coques (11), de préférence les deux coques (11), comprennent au moins une cloison séparatrice (5) présentant une extrémité configurée pour être en contact avec une extrémité du tube (6) lorsque les deux coques sont assemblées avec ledit tube, afin de séparer la chambre de collecte (26) en au moins deux parties (26a, 26b) étanches l'une par rapport à l'autre quand les coques sont assemblées, chacune des parties communiquant fluidiquement respectivement avec une partie de la pluralité de canaux de circulation (8), **caractérisé en ce qu'**au moins une cloison séparatrice, de préférence les deux, est obtenue par emboutissage, et **en ce que** la base de ladite cloison séparatrice comprend un embouti (9) formant une rainure, la rainure étant configurée pour comprendre l'angle dû à l'emboutissage, de façon à ce que l'extrémité de la cloison séparatrice (5) présente une face parallèle à la face de l'extrémité du tube (61).

2. Dispositif selon l'une des quelconques revendications précédentes dans lequel l'extrémité de la cloison séparatrice de chaque coque présente une paroi verticale configurée pour être en contact continu avec l'extrémité du tube.

3. Dispositif selon l'une des quelconques revendications précédentes dans lequel la cloison séparatrice est en contact avec le tube au niveau d'au moins un canal de la pluralité de canaux de distribution.

4. Dispositif selon la revendication précédente, dans lequel le canal en contact avec la cloison séparatrice est plein.

5. Dispositif selon la revendication 3, dans lequel le canal en contact avec la cloison séparatrice est vide, la cloison séparatrice étant dimensionnée pour obstruer le canal lorsque les deux coques de la boite collectrice sont assemblées avec le tube.

6. Dispositif selon l'une des quelconques revendications précédentes dans lequel le dispositif comprend un deuxième embouti au sommet de la cloison séparatrice, configuré pour réduire le rayon d'emboutissage dudit sommet de façon à ce que l'extrémité de la cloison séparatrice (5) présente une face parallèle à la face de l'extrémité du tube (61).

7. Dispositif selon l'une des quelconques revendications précédentes dans lequel le dispositif comprend une deuxième boite de collecte à une deuxième extrémité du tube opposée à la première extrémité du tube comprenant la première boite de collecte, la deuxième boite de collecte étant identique à la première boite de collecte.

8. Dispositif selon l'une des quelconques revendications précédentes dans lequel les deux coques sont symétriques.

9. Dispositif selon l'une des quelconques revendications précédentes dans lequel l'embouti (9) forme une gorge présentant une profondeur comprise entre 0.05 mm et 0.2 mm.

10. Dispositif selon l'une des quelconques revendications précédentes dans lequel la boite de collecte (10) est en métal tel que l'aluminium ou en plastique.

11. Dispositif de régulation thermique (4) selon l'une des revendications précédentes, dans lequel au moins une des coques, de préference les deux, comprend des orifices.

12. Dispositif selon la revendication précédente, dans lequel au moins deux manchons de raccordement (18, 18a, 18b), de préférence quatre, sont configurés pour communiquer fluidiquement avec la chambre de collecte (26), de préférence avec chaque partie de la chambre de collecte (26), les manchons de raccordement (18, 18a, 18b) présentant de préférence des formes distinctes l'un par rapport à l'autre.

13. Système de régulation thermique comprenant plusieurs dispositifs de régulation thermique (4) selon l'une des revendications précédentes, et plusieurs organes de stockage électrique disposés en rangée, les dispositifs de régulations étant connectés les uns aux autres par leurs manchons et étant configurés pour être en contact avec lesdites rangées d'organes de stockage.

14. Procédé d'assemblage d'un dispositif de régulation thermique (4) selon l'une des revendications 1 à 12, qui comprend les étapes suivantes :
- on fournit deux coques qu'on emboutit de façon à former une cloison séparatrice de la chambre de collecte, la cloison séparatrice comprenant à sa base un embouti formant gorge présentant le rayon d'embouti, aussi appelé embouti résiduel,
- on assemble les deux coques l'une avec l'autre pour former ladite boite de collecte formant la chambre de collecte,
- on fournit un tube (6) comportant une pluralité de canaux de circulation (8) de fluide caloporteur, qu'on introduit dans la boite de collecte, de façon à ce qu'une extrémité du tube soit en contact avec une extrémité de la cloison séparatrice,
- on fixe l'assemblage des coques et du tube, par brasage, collage, soudage, clipsage, ultrason, ou un mélange de ceux-ci.

15. Procédé d'assemblage d'un dispositif de régulation thermique (4) selon la revendication précédente, qui comprend en outre une étape d'emboutissage du sommet de la cloison séparatrice, de façon à réduire le rayon d'emboutissage dudit sommet pour que l'extrémité de la cloison séparatrice (5) présente une face parallèle à la face de l'extrémité du tube (61).

## Patentansprüche

1. Thermische Regulierungsvorrichtung (4) zur Kühlung von elektrischen Energiespeicherorganen (2), wobei die thermische Regulierungsvorrichtung (4) ein Rohr (6) umfasst, das konfiguriert ist, um mit mindestens einem elektrischen Energiespeicherorgan in Kontakt zu sein, wobei das Rohr eine Vielzahl von Zirkulationskanälen (8) für Wärmeträgerfluid umfasst, mindestens eine erste Sammelbox (10), die an einem ersten Ende des Rohrs (61) angeordnet ist, wobei die erste Sammelbox (10) mindestens zwei Schalen (11) umfasst, die konfiguriert sind, um zusammen montiert zu werden, um eine Sammelkammer (26) zu bilden, die fluidisch mit der Vielzahl von Zirkulationskanälen (8) des Rohrs (6) kommuniziert, wobei mindestens eine der Schalen (11), vorzugsweise beide Schalen (11), mindestens eine Trennwand (5) umfasst, die ein Ende aufweist, das konfiguriert ist, um mit einem Ende des Rohrs (6) in Kontakt zu sein, wenn die beiden Schalen mit dem Rohr montiert sind, um die Sammelkammer (26) in mindestens zwei Teile (26a, 26b) zu trennen, die gegeneinander dicht sind, wenn die Schalen montiert sind, wobei jeder Teil fluidisch jeweils mit einem Teil der Vielzahl von Zirkulationskanälen (8) kommuniziert, **dadurch gekennzeichnet, dass** mindestens eine Trennwand, vorzugsweise beide, durch Tiefziehen erhalten wird, und dadurch, dass die Basis der Trennwand eine Tiefziehung (9) umfasst, die eine Rille bildet, wobei die Rille konfiguriert ist, um den durch das Tiefziehen verursachten Winkel aufzunehmen, so dass das Ende der Trennwand (5) eine Fläche aufweist, die parallel zur Fläche des Endes des Rohrs (61) ist.

2. Vorrichtung nach einem der vorhergehenden Ansprüche, bei der das Ende der Trennwand jeder Schale eine vertikale Wand aufweist, die konfiguriert ist, um in kontinuierlichem Kontakt mit dem Ende des Rohrs zu sein.

3. Vorrichtung nach einem der vorhergehenden Ansprüche, bei der die Trennwand mit dem Rohr auf der Höhe mindestens eines Kanals der Vielzahl von Verteilungskanälen in Kontakt ist.

4. Vorrichtung nach dem vorhergehenden Anspruch, bei der der Kanal, der mit der Trennwand in Kontakt ist, voll ist.

5. Vorrichtung nach Anspruch 3, bei der der Kanal, der mit der Trennwand in Kontakt ist, leer ist, wobei die Trennwand dimensioniert ist, um den Kanal zu verschließen, wenn die beiden Schalen der Sammelbox mit dem Rohr montiert sind.

6. Vorrichtung nach einem der vorhergehenden Ansprüche, bei der die Vorrichtung eine zweite Tiefziehung an der Spitze der Trennwand umfasst, die konfiguriert ist, um den Tiefziehradius der Spitze zu reduzieren, so dass das Ende der Trennwand (5) eine Fläche aufweist, die parallel zur Fläche des Endes des Rohrs (61) ist.

7. Vorrichtung nach einem der vorhergehenden Ansprüche, bei der die Vorrichtung eine zweite Sammelbox an einem zweiten Ende des Rohrs umfasst, das dem ersten Ende des Rohrs gegenüberliegt, das die erste Sammelbox umfasst, wobei die zweite Sammelbox identisch mit der ersten Sammelbox ist.

8. Vorrichtung nach einem der vorhergehenden Ansprüche, bei der die beiden Schalen symmetrisch sind.

9. Vorrichtung nach einem der vorhergehenden Ansprüche, bei der die Tiefziehung (9) eine Kehle bildet, die eine Tiefe zwischen 0,05 mm und 0,2 mm aufweist.

10. Vorrichtung nach einem der vorhergehenden Ansprüche, bei der die Sammelbox (10) aus Metall wie Aluminium oder aus Kunststoff besteht.

11. Thermische Regulierungsvorrichtung (4) nach einem der vorhergehenden Ansprüche, bei der mindestens eine der Schalen, vorzugsweise beide, Öffnungen umfasst.

12. Vorrichtung nach dem vorhergehenden Anspruch, bei der mindestens zwei Anschlussstutzen (18, 18a, 18b), vorzugsweise vier, konfiguriert sind, um fluidisch mit der Sammelkammer (26), vorzugsweise mit jedem Teil der Sammelkammer (26), zu kommunizieren, wobei die Anschlussstutzen (18, 18a, 18b) vorzugsweise unterschiedliche Formen voneinander aufweisen.

13. Thermisches Regulierungssystem, umfassend mehrere thermische Regulierungsvorrichtungen (4) nach einem der vorhergehenden Ansprüche und mehrere elektrische Speicherorgane, die in einer Reihe angeordnet sind, wobei die Regulierungsvorrichtungen durch ihre Stutzen miteinander verbunden sind und konfiguriert sind, um mit den Reihen von Speicherorganen in Kontakt zu sein.

14. Verfahren zur Montage einer thermischen Regulierungsvorrichtung (4) nach einem der Ansprüche 1 bis 12, das die folgenden Schritte umfasst:
- Bereitstellen von zwei Schalen, die tiefgezogen werden, um eine Trennwand der Sammelkammer zu bilden, wobei die Trennwand an ihrer Basis eine Tiefziehung umfasst, die eine Kehle bildet, die den Tiefziehradius, auch Resttiefziehung genannt, aufweist,
- Zusammenfügen der beiden Schalen miteinander, um die Sammelbox zu bilden, die die Sammelkammer bildet,
- Bereitstellen eines Rohrs (6), das eine Vielzahl von Zirkulationskanälen (8) für Wärmeträgerfluid umfasst, das in die Sammelbox eingeführt wird, so dass ein Ende des Rohrs mit einem Ende der Trennwand in Kontakt ist,
- Befestigen der Baugruppe aus Schalen und Rohr durch Löten, Kleben, Schweißen, Clipsen, Ultraschall oder eine Kombination davon.

15. Verfahren zur Montage einer thermischen Regulierungsvorrichtung (4) nach dem vorhergehenden Anspruch, das ferner einen Schritt des Tiefziehens der Spitze der Trennwand umfasst, um den Tiefziehradius der Spitze zu reduzieren, damit das Ende der Trennwand (5) eine Fläche aufweist, die parallel zur Fläche des Endes des Rohrs (61) ist.

## Claims

1. Thermal regulation device (4) for cooling electrical energy storage components (2), the thermal regulation device (4) comprising a tube (6) configured to be in contact with at least one electrical energy storage component, the tube comprising a plurality of heat transfer fluid circulation channels (8), at least one first collection box (10) arranged at a first end of the tube (61), the first collection box (10) comprising at least two shells (11) configured to be assembled together to form a collection chamber (26) fluidically communicating with the plurality of circulation channels (8) of the tube (6), at least one of said shells (11), preferably both shells (11), comprising at least one separator partition (5) having an end configured to be in contact with an end of the tube (6) when the two shells are assembled with said tube, in order to separate the collection chamber (26) into at least two parts (26a, 26b) sealed from one another when the shells are assembled, each of the parts fluidically communicating respectively with a portion of the plurality of circulation channels (8), **characterized in that** at least one separator partition, preferably both, is obtained by stamping, and **in that** the base of said separator partition comprises a stamped recess (9) forming a groove, the groove being configured to accommodate the angle due to stamping, so that the end of the separator partition (5) presents a face parallel to the face of the end of the tube (61).

2. Device according to any one of the preceding claims in which the end of the separator partition of each shell has a vertical wall configured to be in continuous contact with the end of the tube.

3. Device according to any one of the preceding claims in which the separator partition is in contact with the tube at at least one channel of the plurality of distribution channels.

4. Device according to the preceding claim, in which the channel in contact with the separator partition is solid.

5. Device according to claim 3, in which the channel in contact with the separator partition is empty, the separator partition being dimensioned to obstruct the channel when the two shells of the collector box are assembled with the tube.

6. Device according to any one of the preceding claims in which the device comprises a second stamped recess at the top of the separator partition, configured to reduce the stamping radius of said top so that the end of the separator partition (5) presents a face parallel to the face of the end of the tube (61).

7. Device according to any one of the preceding claims in which the device comprises a second collection box at a second end of the tube opposite to the first end of the tube comprising the first collection box, the second collection box being identical to the first collection box.

8. Device according to any one of the preceding claims in which the two shells are symmetrical.

9. Device according to any one of the preceding claims in which the stamped recess (9) forms a groove having a depth between 0.05 mm and 0.2 mm.

10. Device according to any one of the preceding claims in which the collection box (10) is made of metal such as aluminum or plastic.

11. Thermal regulation device (4) according to one of the preceding claims, in which at least one of the shells, preferably both, comprises openings.

12. Device according to the preceding claim, in which at least two connection sleeves (18, 18a, 18b), preferably four, are configured to fluidically communicate with the collection chamber (26), preferably with each part of the collection chamber (26), the connection sleeves (18, 18a, 18b) preferably having distinct shapes from one another.

13. Thermal regulation system comprising several thermal regulation devices (4) according to one of the preceding claims, and several electrical storage components arranged in a row, the regulation devices being connected to each other by their sleeves and being configured to be in contact with said rows of storage components.

14. Method of assembling a thermal regulation device (4) according to one of claims 1 to 12, which comprises the following steps:
- providing two shells that are stamped to form a separator partition of the collection chamber, the separator partition comprising at its base a stamped recess forming a groove having the stamping radius, also called residual stamping,
- assembling the two shells with each other to form said collection box forming the collection chamber,
- providing a tube (6) comprising a plurality of heat transfer fluid circulation channels (8), which is introduced into the collection box, so that an end of the tube is in contact with an end of the separator partition,
- fixing the assembly of the shells and the tube, by brazing, gluing, welding, clipping, ultrasound, or a mixture thereof.

15. Method of assembling a thermal regulation device (4) according to the preceding claim, which further comprises a step of stamping the top of the separator partition, so as to reduce the stamping radius of said top so that the end of the separator partition (5) presents a face parallel to the face of the end of the tube (61).
